# FASCICULE DE BREVET EUROPEEN

(11) **EP 3 601 905 B1**
(45) Date de publication et mention de la délivrance du brevet: **23.06.2021**
(21) Numéro de dépôt: 18714580.0
(22) Date de dépôt: 15.03.2018
(51) Int. Cl.: F25B 23/00, H01S 3/04

(54) **RÉFRIGÉRATEUR OPTIQUE ET CAPTEUR COMPORTANT UN TEL RÉFRIGÉRATEUR**
OPTISCHER KÜHLSCHRANK UND SENSOR MIT SOLCH EINEM KÜHLSCHRANK
OPTICAL REFRIGERATOR AND SENSOR INCLUDING SUCH A REFRIGERATOR

(30) Priorité: 29.03.2017 FR 1752628
(43) Date de publication de la demande: 05.02.2020
(73) Titulaire: L'AIR LIQUIDE, Société Anonyme pour l'Etude et l'Exploitation des Procédés Georges Claude, 75007 Paris (FR)
(72) Inventeur: NIOT, Jean-Michel, 38360 Sassenage (FR); GARDELEIN, Arnaud, 38600 Fontaine (FR)
(74) Mandataire: Air Liquide
(86) Numéro de dépôt international: PCT/FR2018/050622
(87) Numéro de publication internationale: WO 2018/178537

(56) Documents cités:
- US-A1- 2015 075 181
- US-B1- 8 720 219
- US-B1- 9 362 712

## Description

L'invention concerne un réfrigérateur optique ainsi qu'un détecteur comprenant un réfrigérateur.

L'invention concerne plus particulièrement un réfrigérateur optique, notamment pour le refroidissement d'un capteur ou détecteur infrarouge, le réfrigérateur comprenant une source de rayonnement laser, un cristal de refroidissement configuré pour recevoir le rayonnement laser de la source et se refroidir, un élément à refroidir et un lien thermique en échange thermique d'une part avec le cristal et, d'autre part avec l'élément à refroidir, pour transférer des frigories du cristal vers l'élément à refroidir.

Pour l'observation de la terre par satellite dans le domaine de l'infrarouge, il est nécessaire de refroidir les détecteurs ou photo-détecteurs infrarouge à des températures cryogéniques, typiquement inférieures à 200 K. Les solutions actuelles reposent soit sur l'utilisation de systèmes passifs, soit des systèmes actifs à base d'actionneurs mécaniques.

Une méthode de refroidissement optique connue repose sur le déplacement anti-stokes ou « fluorescence anti-stokes ». Cf. par exemple US9362712, US60441610 ou US8720219. Cette solution repose sur le principe physique suivant : lorsque les bandes d'émission et absorption d'un matériau (cristal) sont superposées, l'excitation de la partie supérieure du spectre d'absorption conduit à l'émission de photons plus énergétiques que les photons absorbés. Cette différence d'énergie (émission/absorption) est due à l'annihilation de phonons dans le réseau cristallin du matériau, le quanta vibratoire pour les solides. A l'état solide, l'énergie thermique est principalement contenue dans les modes vibratoires du réseau. En effet l'agitation thermique provoque l'oscillation des atomes autour de leur position d'équilibre. En conséquence la chaleur est extraite du matériau par l'émission anti-stokes ce qui induit un effet de refroidissement. Cf. également la publication de M.Sheik-Bahe and R.I. Epstein « Optical Réfrigération » Nat. Photonics 1, 12, 693 (2007).

Cette technologie de réfrigération est potentiellement applicable au refroidissement de capteurs dans le domaine spatial.

Dans les solutions connues, le lien thermique est constitué d'un tronc de matière (saphir en général) en forme de J dont les faces d'extrémités (sections terminales) sont en contact respectivement avec le cristal et avec l'élément à refroidir. La forme en J ou coudée est prévue pour déporter le cristal de l'axe du plan de l'élément à refroidir tout en minimisant le rayonnement transmis (cf.

US2015075181A1). US 2015075181 A1 divulgue un réfrigérateur optique selon le préambule de la revendication 1.

Les dispositifs connus sont cependant peu compatibles avec les contraintes de certaines applications, notamment spatiales.

Ces contraintes ou insuffisances de l'art antérieur peuvent concerner en particulier tout ou partie de :
- la tenue mécanique du cristal sur l'élément à refroidir,
- la conduction de l'énergie à extraire de l'élément à refroidir vers le cristal,
- la limitation des pertes thermiques (le lien thermique doit piéger le minimum de rayonnement anti-Stokes ou transférer le minimum de ce rayonnement vers l'élément à refroidir),
- le problème de fiabilité en cas de casse d'un élément du dispositif.

Un but de la présente invention est de pallier tout ou partie des inconvénients de l'art antérieur relevés ci-dessus.

A cette fin, le réfrigérateur selon l'invention, par ailleurs conforme à la définition générique qu'en donne le préambule ci-dessus, est essentiellement caractérisé en ce que le lien thermique comprend deux lames ayant de premières extrémités respectives en échange thermique respectivement avec deux surfaces distinctes du cristal les deux lames ayant de secondes extrémités en échange thermique avec l'élément à refroidir. Le réfrigérateur selon l'invention est défini dans la revendication 1.

Cette structure du réfrigérateur permet en particulier d'assurer une meilleure tenue mécanique du cristal via le lien thermique. Cette structure du lien en deux parties au moins (deux lames) assure également une redondance mécanique de la fonction de maintien et de transfert du froid qui est indispensable pour la fiabilité d'une application spatiale.

Selon cette architecture, le rayonnement anti-stokes est moins guidé vers l'élément à refroidir et les surfaces d'échange thermique avec le cristal et l'élément à refroidir peuvent être augmentées.

Par ailleurs, des modes de réalisation de l'invention peuvent comporter l'une ou plusieurs des caractéristiques suivantes :
- les secondes extrémités des deux lames sont en échange thermique respectivement avec deux surfaces distinctes de l'élément à refroidir,
- les secondes extrémités des deux lames prennent en sandwich l'élément à refroidir, c'est-à-dire que les lames sont disposées de part et d'autre de deux flancs opposés de l'élément à refroidir,
- les premières extrémités des deux lames prennent en sandwich le cristal c'est-à-dire que les lames sont disposées de part et d'autre de deux flancs opposés du cristal,
- les lames ont chacune une forme coudée ou en « J », c'est-à-dire que chaque lame s'étend dans un plan de façon non rectiligne, les extrémités de la lame en échange thermique respectivement avec le cristal et l'élément à refroidir étant situées respectivement au niveau de deux extrémités situées de part et d'autre d'un coude ou angle,
- lames sont constituées d'un matériau transparent tel que du verre ou du saphir
- le dispositif comporte au moins deux miroirs à haute réflectivité disposés autour du cristal pour concentrer la lumière dans le cristal,
- le dispositif comporte des écrans d'absorption du rayonnement lumineux générés par le cristal, les écrans étant disposés autour du cristal,
- le dispositif comporte des écrans d'absorption du rayonnement lumineux générés par le cristal également autour des faces du cristal relié aux lames,
- l'élément à refroidir est un doigt froid ou un plan focal destiné à transférer des frigories à une charge,
- le cristal a une forme parallélépipédique ou toute forme appropriée,
- les lames ont une épaisseur compris entre 0,1 et 5mm, notamment entre 0,5 mm et 5 mm et, une largeur comprise entre 0,1 et 10 mm, notamment entre 1 mm et 10 mm et une longueur comprise entre 0,1 et 50 mm notamment entre 2 mm entre 40 mm,
- les lames sont en contact avec le cristal sur une surface comprise entre 1 mm² et 100 mm² notamment 1 mm² et 75 mm²,
- les lames sont en contact avec l'élément à refroidir sur une surface comprise entre 0,1 mm² et 100 mm² et notamment entre 1 mm² et 100 mm².

L'invention concerne également un détecteur comprenant un organe de mesure et réfrigérateur de l'organe de mesure, le réfrigérateur étant conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de côté, schématique et partielle illustrant un exemple de structure et de fonctionnement d'un réfrigérateur optique,
- la figure 2 représente une vue de côté, schématique et partielle d'un détail d'un exemple de structure de réfrigérateur optique selon l'invention,
- la figure 3 représente une vue de face, schématique et partielle, d'un détail du réfrigérateur optique de la figure 2,
- la figure 4 représente une vue en perspective, schématique et partielle d'une partie d'un autre exemple de structure de réfrigérateur optique selon l'invention intégré à un capteur en vue de son refroidissement,
- les figures 5 et 6 représentent des vues en perspective, schématiques et partielles du réfrigérateur de la figure 4 dans deux configurations partiellement démontées.

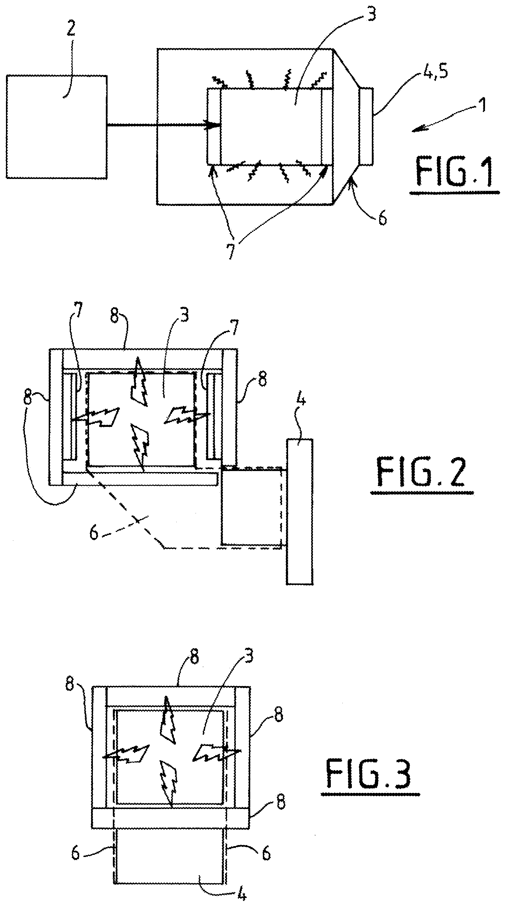

La figure 1 illustre la structure et le principe de fonctionnement d'un réfrigérateur optique.

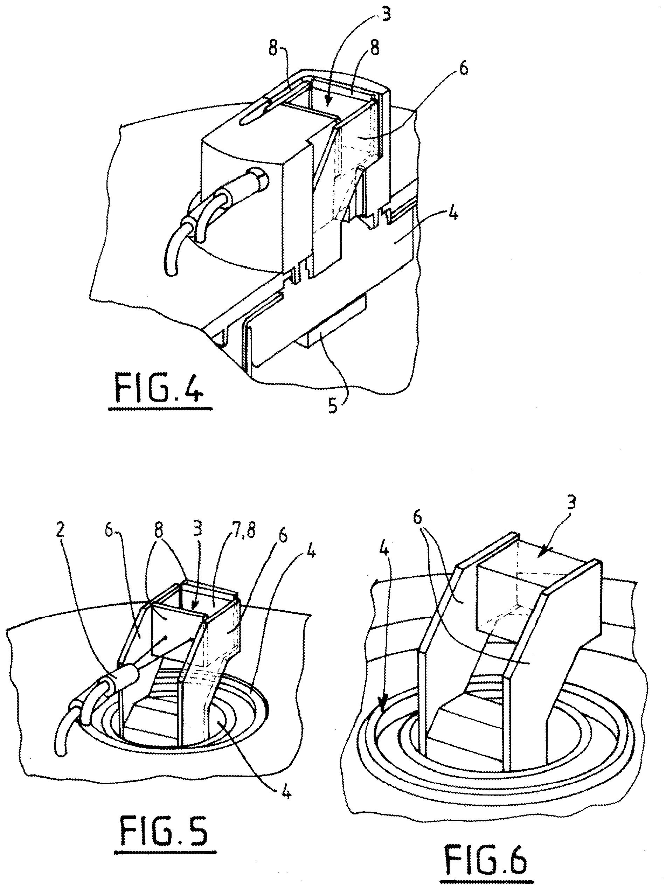

Un tel réfrigérateur 1 comprend une source 2 de rayonnement laser configurée pour émettre un rayonnement vers un cristal 3 de refroidissement (cf. figure 5 également). Le cristal 3 est encadré entre au moins deux miroirs 7 réfléchissants pour concentrer la lumière dans le cristal 3. L'ensemble (et notamment le type de cristal 3 ou équivalent) est configuré pour générer un refroidissement du cristal 3 par effet « Anti-Stokes ».

Le cristal 3 est mis en échange thermique (contact) avec un élément 4, 5 à refroidir via un lien 6 thermique.

Comme illustré aux figures 2 à 6, le lien thermique comprend deux lames 6 ayant de premières extrémités respectives en échange thermique (de préférence contact direct) respectivement avec deux surfaces distinctes du cristal 3, les deux lames 6 ayant de secondes extrémités en échange thermique (de préférence contact direct) avec l'élément 4 à refroidir.

Comme illustré, de préférence les secondes extrémités des deux lames 6 sont en échange thermique respectivement avec deux surfaces ou flancs distincts de l'élément 4 à refroidir. Par exemple, les secondes extrémités des deux lames 6 prennent en sandwich (enserrent latéralement) l'élément 4 à refroidir, c'est-à-dire que les lames 6 sont disposées de part et d'autre de deux flancs opposés de l'élément 4 à refroidir (cf. figure 2 à 6).

De la même façon, les premières extrémités des deux lames 6 prennent de préférence en sandwich le cristal 3 c'est-à-dire que les lames 6 sont disposées de part et d'autre de deux flancs opposés du cristal 3.

Les lame 6 ont de préférence chacune une forme coudée ou en « J », c'est-à-dire que chaque lame 6 s'étend dans un plan de façon non rectiligne, les extrémités de la lame 6 en échange thermique respectivement avec le cristal 3 et l'élément 4 à refroidir étant situées respectivement au niveau de deux extrémités situées de part et d'autre du coude ou angle.

Les lames 6 ont par exemple une épaisseur comprise entre 0,5 et 5mm, une largeur comprise entre 1 et 10mm et une longueur comprise entre 2 et 40mm._A chaque extrémité les lames 6 sont en contact avec le cristal 3 et l'élément à refroidir sur une surface par exemple comprise 1mm² et 75mm² et 1mm² et 100mm² respectivement.

Les surfaces de contact pour l'échange thermique sont ainsi significativement augmentées par rapport aux solutions connues sans augmenter l'encombrement du dispositif.

Les deux lames 6 sont constituées par exemple de saphir ou de tout autre ou autre matériau transparent approprié: verre... Par transparent on entend en particulier : transparent aux longueurs d'ondes appropriées (par exemple pour laisser passer le rayonnement émis par le cristal qui est symbolisé par des traits ou flèches aux figures).

Cette géométrie permet de limiter la quantité de rayonnement anti-stokes est du cristal vers l'élément 4 à refroidir.

De plus, cette architecture de lames 6 fines permet de disposer aisément autour du cristal 3 les miroirs 7 et des écrans optiques 8. Les écrans optiques 8 (parfois appelés « baffles optiques ») sont prévus pour isoler le cristal et notamment pour absorber les rayonnements autour du cristal 3. Ces écrans 8 peuvent être composés notamment de matériau métallique, cuivre, aluminium...

Comme visible aux figures 3, 4 et 5 notamment, des écrans 8 optiques peuvent être disposés de part et d'autres des premières extrémités des lames 6 en contact avec le cristal 3. En particulier, et comme illustré aux figures, l'architecture de lien 6 thermique permet de disposer les écrans 8 optiques tout autour du cristal 3. Ainsi, dans le cas d'un cristal 3 de forme parallélépipédique, un écran 8 peut être disposé en vis-à-vis des six faces du cristal 3.

Ceci permet d'isoler optiquement le cristal 3 de manière plus complète que selon l'art antérieur et notamment sous la face inférieure du cristal (tournée vers l'élément 4 à refroidir. Ceci améliore l'efficacité du système.

Comme illustré à la figure 5, la source 2 laser peut être configurée pour diriger un faisceau au travers d'un orifice d'un écran 8.

Les figures 4 à 6 illustrent un exemple de structure d'un ensemble intégré comprenant un refroidisseur 1 et un détecteur (notamment infrarouge).

Le volume de la partie réfrigérateur peut être réduit par exemple à un volume cubique de moins de dix cm de côté.

Par rapport aux solutions existantes, outre la réduction des dimensions, la platine de détection peut être simplifiée.

Dans l'exemple de la figure 4, le lien thermique est en échange avec une pièce 4 qui peut être un plan focal en échange thermique avec un composant 5 du capteur à refroidir tel qu'un capteur optique d'un appareil spatial (satellite ou autre).

Cette architecture présente également une rapidité de réponse thermique accrue. En effet, il semble possible d'atteindre un temps de descente en froid à la température cible (sans charge) de l'ordre de 10 minutes environ.

L'invention peut s'appliquer également au refroidissement in-situ de composants microélectroniques (par exemple microcircuits ou transistors de puissance) à des températures proches de l'ambiant, et le refroidissement de cristaux utilisés dans les lasers de forte puissance (continus ou puisés).

## Revendications

1. Réfrigérateur optique, notamment pour le refroidissement d'un capteur ou détecteur infrarouge, le réfrigérateur (1) comprenant une source (2) de rayonnement laser, un cristal (3) de refroidissement configuré pour recevoir le rayonnement laser de la source (2) et se refroidir, un élément (4) à refroidir et un lien (6) thermique en échange thermique d'une part avec le cristal (3) et, d'autre part avec l'élément (4) à refroidir, pour transférer des frigories du cristal (3) vers l'élément (4) à refroidir, **caractérisé en ce que** le lien thermique comprend deux lames (6) ayant de premières extrémités respectives en échange thermique respectivement avec deux surfaces distinctes du cristal (3) les deux lames (6) ayant de secondes extrémités en échange thermique avec l'élément (4) à refroidir.

2. Réfrigérateur selon la revendication 1, **caractérisé en ce que** les secondes extrémités des deux lames (6) sont en échange thermique respectivement avec deux surfaces distinctes de l'élément (4) à refroidir.

3. Réfrigérateur selon la revendication 2, **caractérisé en ce que** les secondes extrémités des deux lames (6) prennent en sandwich l'élément (4) à refroidir, c'est-à-dire que les lames (6) sont disposées de part et d'autre de deux flancs opposés de l'élément (4) à refroidir.

4. Réfrigérateur selon l'une quelconque des revendications 1 à 3, **caractérisé en ce que** les premières extrémités des deux lames (6) prennent en sandwich le cristal (3) c'est-à-dire que les lames (6) sont disposées de part et d'autre de deux flancs opposés du cristal (3).

5. Réfrigérateur selon l'une quelconque des revendications 1 à 3, **caractérisé en ce que** les lames (6) ont chacune une forme coudée ou en « J », c'est-à-dire que chaque lame (6) s'étend dans un plan de façon non rectiligne, les extrémités de la lame (6) en échange thermique respectivement avec le cristal (3) et l'élément (4) à refroidir étant situées respectivement au niveau de deux extrémités situées de part et d'autre d'un coude ou angle.

6. Réfrigérateur selon l'une quelconque des revendications 1 à 5, **caractérisé en ce que** les lames (6) sont constituées d'un matériau transparent tel que du verre ou du saphir.

7. Réfrigérateur selon l'une quelconque des revendications 1 à 6, **caractérisé en ce qu'**il comporte au moins deux miroirs (7) à haute réflectivité disposés autour du cristal (3) pour concentrer la lumière dans le cristal (3).

8. Réfrigérateur selon l'une quelconque des revendications 1 à 7, **caractérisé en ce qu'**il comporte des écrans (8) d'absorption du rayonnement lumineux générés par le cristal, les écrans (8) étant disposés autour du cristal.

9. Réfrigérateur selon la revendication 8, **caractérisé en ce qu'**il comporte des écrans (8) d'absorption du rayonnement lumineux générés par le cristal également autour des faces du cristal (3) relié aux lames (6).

10. Réfrigérateur selon l'une quelconque des revendications 1 à 9, **caractérisé en ce que** l'élément (4) à refroidir est un doigt (4) froid ou un plan focal destiné à transférer des frigories à une charge (5).

11. Détecteur comprenant un organe (5) de mesure et réfrigérateur (1) de l'organe (5) de mesure, **caractérisé en ce que** le réfrigérateur (1) est conforme à l'une quelconque des revendications ci-dessus.

## Patentansprüche

1. Optische Kühleinrichtung, insbesondere zur Kühlung eines Infrarotdetektors oder -sensors, wobei die Kühleinrichtung (1) eine Laserstrahlungsquelle (2), ein Kühlkristall (3), das dazu ausgebildet ist, die Laserstrahlung der Quelle (2) zu empfangen und sich abzukühlen, ein zu kühlendes Element (4) und eine thermische Verbindung (6) im Wärmeaustausch einerseits mit dem Kristall (3) und andererseits mit dem zu kühlenden Element (4), um Frigorien vom Kristall (3) zum zu kühlenden Element (4) zu übertragen, umfasst, **dadurch gekennzeichnet, dass** die thermische Verbindung zwei Blätter (4) mit jeweiligen ersten Enden jeweils im Wärmeaustausch mit zwei gesonderten Flächen des Kristalls (3) umfasst, wobei die zwei Blätter (6) zweite Enden im Wärmeaustausch mit dem zu kühlenden Element (4) aufweisen.

2. Kühleinrichtung nach Anspruch 1, **dadurch gekennzeichnet, dass** die zweiten Enden der zwei Blätter (6) jeweils mit zwei gesonderten Flächen des zu kühlenden Elements (4) im Wärmeaustausch stehen.

3. Kühleinrichtung nach Anspruch 2, **dadurch gekennzeichnet, dass** die zweiten Enden der zwei Blätter (6) das zu kühlende Element (4) sandwichartig aufnehmen, das heißt, dass die Blätter (6) beiderseits zweier gegenüberliegender Flanken des zu kühlenden Elements (4) angeordnet sind.

4. Kühleinrichtung nach einem der Ansprüche 1 bis 3, **dadurch gekennzeichnet, dass** die ersten Enden der zwei Blätter (6) den Kristall (3) sandwichartig aufnehmen, das heißt, dass die Blätter (6) beiderseits zweier gegenüberliegender Flanken des Kristalls (3) angeordnet sind.

5. Kühleinrichtung nach einem der Ansprüche 1 bis 3, **dadurch gekennzeichnet, dass** die Blätter (6) jeweils eine gebogene oder "J-" Form aufweisen, das heißt, dass sich jedes Blatt (6) in einer Ebene in nicht geradliniger Weise erstreckt, wobei sich die Enden des Blatts (6), die mit dem Kristall (3) beziehungsweise dem zu kühlenden Element (4) im Wärmeaustausch stehen, jeweils an zwei Enden befinden, die sich beiderseits eines Bogens oder Winkels befinden.

6. Kühleinrichtung nach einem der Ansprüche 1 bis 5, **dadurch gekennzeichnet, dass** die Blätter (6) aus einem transparenten Material wie beispielsweise Glas oder Saphir gebildet sind.

7. Kühleinrichtung nach einem der Ansprüche 1 bis 6, **dadurch gekennzeichnet, dass** sie wenigstens zwei Spiegel (7) hoher Reflektivität aufweist, die um den Kristall (3) herum angeordnet sind, um das Licht in dem Kristall (3) zu bündeln.

8. Kühleinrichtung nach einem der Ansprüche 1 bis 7, **dadurch gekennzeichnet, dass** sie Schirme (8) zur Absorption der Lichtstrahlung aufweist, die vom Kristall erzeugt wird, wobei die Schirme (8) um den Kristall herum angeordnet sind.

9. Kühleinrichtung nach Anspruch 8, **dadurch gekennzeichnet, dass** sie Schirme (8) zur Absorption der Lichtstrahlung, die vom Kristall erzeugt wird, ebenfalls um die Flächen des Kristalls (3) herum, das mit den Blättern (6) verbunden ist, aufweist.

10. Kühleinrichtung nach einem der Ansprüche 1 bis 9, **dadurch gekennzeichnet, dass** das zu kühlende Element (4) ein Kühlfinger (4) oder eine Brennebene zur Übertragung von Frigorien an eine Last (5) ist.

11. Detektor umfassend eine Messeinheit (5) und Kühleinrichtung (1) der Messeinheit (5), **dadurch gekennzeichnet, dass** die Kühleinrichtung (1) einem der vorhergehenden Ansprüche entspricht.

## Claims

1. Optical refrigerator, in particular for cooling an infrared detector or sensor, the refrigerator (1) comprising a source (2) of laser radiation, a cooling crystal (3) configured to receive the laser radiation from the source (2) and to be cooled, an element (4) to be cooled and a thermal link (6) in heat exchange on the one hand with the crystal (3) and on the other hand with the element (6) to be cooled, in order to transfer frigories from the crystal (3) to the element (4) to be cooled, **characterized in that** the thermal link comprises two plates (6) having respective first ends in heat exchange with two distinct surfaces of the crystal (3), respectively, the two plates (6) having second ends in heat exchange with the element (4) to be cooled.

2. Refrigerator according to Claim 1, **characterized in that** the second ends of the two plates (6) are in heat exchange with two distinct surfaces of the element (4) to be cooled, respectively.

3. Refrigerator according to Claim 2, **characterized in that** the second ends of the two plates (6) sandwich the element (4) to be cooled, i.e. the plates (6) are placed on either side of two opposite flanks of the element (4) to be cooled.

4. Refrigerator according to any one of Claims 1 to 3, **characterized in that** the first ends of the two plates (6) sandwich the crystal (3), i.e. the plates (6) are placed on either side of two opposite flanks of the crystal (3).

5. Refrigerator according to any one of Claims 1 to 3, **characterized in that** the plates (6) each have a "J" or doglegged shape, i.e. each plate (6) extends in a plane non-rectilinearly, the ends of the plate (6) in heat exchange with the crystal (3) and the element (4) to be cooled, respectively, being located at two ends located on either side of a dogleg or corner, respectively.

6. Refrigerator according to any one of Claims 1 to 5, **characterized in that** the plates (6) are made of a transparent material such as glass or sapphire.

7. Refrigerator according to any one of Claims 1 to 6, **characterized in that** it comprises at least two mirrors (7) of high reflectivity placed around the crystal (3) in order to concentrate the light in the crystal (3).

8. Refrigerator according to any one of Claims 1 to 7, **characterized in that** it comprises baffles (8) for absorbing the light radiation generated by the crystal, the baffles (8) being placed around the crystal.

9. Refrigerator according to Claim 8, **characterized in that** it comprises baffles (8) for absorbing the light radiation generated by the crystal also around the faces of the crystal (3) linked to the plates (6).

10. Refrigerator according to any one of Claims 1 to 9, **characterized in that** the element (4) to be cooled is a cold finger (4) or a focal plane intended to transfer frigories to a load (5).

11. Detector comprising a measuring unit (5) and refrigerator (1) of the measuring unit (5), **characterized in that** the refrigerator (1) is according to any one of the above claims.
